# EUROPÄISCHE PATENTSCHRIFT

(11) **EP 3 867 678 B1**
(45) Veröffentlichungstag und Bekanntmachung des Hinweises auf die Patenterteilung: **09.07.2025**
(21) Anmeldenummer: 19816588.8
(22) Anmeldetag: 02.12.2019
(51) Int. Cl.: H01Q 13/00, H01P 3/16, H01P 5/08, H01P 5/107

(54) **WELLENLEITERANORDNUNG, WELLENLEITERÜBERGANG UND VERWENDUNG EINER WELLENLEITERANORDNUNG**
WAVEGUIDE ASSEMBLY, WAVEGUIDE PASSAGE, AND USE OF A WAVEGUIDE ASSEMBLY
ENSEMBLE DE GUIDES D'ONDES, JONCTION DE GUIDES D'ONDES ET UTILISATION D'UN ENSEMBLE DE GUIDES D'ONDES

(30) Priorität: 04.12.2018 DE 102018130831
(43) Veröffentlichungstag der Anmeldung: 25.08.2021
(73) Patentinhaber: Rosenberger Hochfrequenztechnik GmbH & Co. KG, 83413 Fridolfing (DE)
(72) Erfinder: KARAU, Simon, 70178 Stuttgart (DE); MEYER, Andre, 28199 Bremen (DE); SCHNEIDER, Martin, 49637 Menslage (DE)
(74) Vertreter: Lorenz, Markus
(86) Internationale Anmeldenummer: PCT/EP2019/083323
(87) Internationale Veröffentlichungsnummer: WO 2020/114973

(56) Entgegenhaltungen:
- DE-A1- 19 635 227
- US-A- 5 067 789
- US-A1- 2007 081 764
- US-A1- 2009 136 176
- US-A1- 2015 008 993

## Beschreibung

Die Erfindung betrifft einen Wellenleiterübergang gemäß Anspruch 1 und eine Wellenleiteranordnung.

Die Erfindung betrifft außerdem eine Verwendung einer Wellenleiteranordnung.

Nach dem derzeitigen Stand der Technik lässt sich die kabelgebundene Datenübertragung im Wesentlichen in zwei unterschiedliche Technologien gliedern. Dabei ist zum einen eine Datenübertragung mittels metallischer Leiter und zum anderen eine optische Datenübertragung mittels Glasfasern bekannt.

Die Signalübertragung über herkömmliche elektrische Leiter, wie beispielsweise Kupferkabel in elektrischen Kabeln, unterliegt bei hohen Frequenzen bekanntermaßen einer starken Signaldämpfung. Somit muss, insbesondere wenn hohe Anforderungen an die Übertragungsbandbreite gestellt werden, mitunter ein hoher Aufwand betrieben werden, um die Spezifikationen zu erreichen - falls überhaupt möglich.

Eine optische Datenübertragung ist hingegen äußerst verlustarm und mit hohen Datenraten möglich. Die optische Datenübertragung erfordert allerdings stets eine Umwandlung elektrischer Signale in optische Signale und umgekehrt, was bei dieser Signalübertragungsart komplexe Sende- und Empfangsstrukturen nötig macht.

Neben den beiden konventionellen Datenübertragungstechniken besteht ein zunehmendes Interesse an einer Technologie, welche versucht, sich als Alternative zu etablieren. Die vorliegende Erfindung bezieht sich auf die Datenübertragung über sogenannte dielektrische Wellenleiter ("Dielectric Waveguides", DWG oder "Polymer Microwave Fibres", PMF).

Bei dieser Technik wird das elektrische Signal einer Trägerfrequenz aufmoduliert, insbesondere im oberen Gigahertz-Bereich (beispielsweise 80 GHz) und als elektromagnetische Welle entlang des dielektrischen Wellenleiters übertragen. Das Verfahren kommt im Gegensatz zu einem optischen Verfahren ohne eine elektro-optische Wandlung aus. Gegenüber metallischen Wellenleitern hat das Konzept den Vorteil, sehr hohe Datenraten, zum Beispiel im Bereich von 50 GB/s, zumindest über mittlere Distanzen, beispielsweise im Bereich von 10 m, übertragen zu können. Dielektrische Wellenleiter erscheinen insbesondere deshalb sehr interessant, da die erforderlichen Halbleitertechnologien für den hohen Gigahertz-Bereich mittlerweile zunehmend zur Verfügung stehen und eine kostengünstige und hohe Integration erlauben, beispielsweise in der RF CMOS-Technologie.

Elektromagnetische Wellen, die sich entlang eines dielektrischen Wellenleiters ausbreiten, können je nach Beschaffenheit des Wellenleiters in unterschiedlichen Feldkonfigurationen auftreten. Diese unterschiedlichen Feldkonfigurationen werden als "Moden" bezeichnet. Wird in einem dielektrischen Wellenleiter nur die Grundmode geführt, spricht man analog zur Glasfaser von einem "Single-Mode"-Wellenleiter. Besteht hingegen die Möglichkeit, dass der dielektrische Wellenleiter mehrere Moden zugleich führen kann, wird von einem "Multi-Mode"-Wellenleiter gesprochen. Wie viele Moden ein dielektrischer Wellenleiter zu führen vermag, hängt im Wesentlichen von der Betriebsfrequenz und von der Geometrie des Wellenleiters, insbesondere der Größe seiner Querschnittsfläche (z. B. Durchmesser eines runden Wellenleiters) sowie von seiner Permittivität (auch dielektrische Leitfähigkeit genannt) ab.

Wie auch bei den herkömmlichen Datenübertragungstechnologien ist beim Entwurf des Übertragungsmediums die von diesem verursachte Dispersion eine kritische Komponente. Als Dispersion wird die Eigenschaft eines Wellenleiters bezeichnet, wonach sich Signale bzw. Signalanteile unterschiedlicher Frequenz mit unterschiedlichen Geschwindigkeiten im Wellenleiter ausbreiten. Die Dispersion ist damit neben der Dämpfung ein entscheidender Parameter, der die maximal erzielbare Datenrate limitieren kann. Im Falle des dielektrischen Wellenleiters lässt sich die Dispersion in zwei Unterarten aufteilen: die Wellenleiterdispersion und die Modendispersion.

Die Wellenleiterdispersion beschreibt die Dispersion der Grundmode, in der in der Regel die Daten übertragen werden, und tritt sowohl in Single- als auch in Multi-Mode-Wellenleitern auf.

Die Modendispersion hingegen bezieht sich auf die unterschiedlichen Ausbreitungsgeschwindigkeiten der einzelnen Moden. Werden höhere Moden am Übergang zum dielektrischen Wellenleiter oder entlang des Leiters durch Diskontinuitäten angeregt, kann es bei einer Datenübertragung zur Verringerung der nutzbaren Leistung und zur Verzerrung des Signals kommen, wodurch die maximal erreichbare Datenrate begrenzt sein kann.

Multi-Mode-Wellenleiter können eine geringere Wellenleiterdispersion als Single-Mode-Wellenleiter aufweisen, können diesen Vorteil jedoch durch etwaige Modendispersion wieder verlieren. Dies ist insbesondere problematisch, wenn entweder durch den Übergang vom Sender bzw. Empfänger auf den dielektrischen Wellenleiter oder durch Diskontinuitäten entlang des Wellenleiters unerwünschte Moden in einem zu hohen Maße angeregt werden.

Zum technischen Hintergrund sei noch auf die folgenden Druckschriften verwiesen.

Die DE 196 35 227 A1 betrifft einen Wellenleiterübergang mit einem einmodigen, metallischen Wellenleiter, einem dielektrischen Stab, der koaxial innerhalb des entfernten Endbereichs des metallischen Wellenleiters montiert ist, wobei sich ein entfernter Bereich des dielektrischen Stabs über das entfernte Ende des metallischen Wellenleiters hinaus erstreckt, und einem zweiten dielektrischen Material, das den dielektrischen Stab über das entfernte Ende des metallischen Wellenleiters hinaus umgibt, wobei ein Endbereich des dielektrischen Stabs sich nach innen zu seinem entfernten Ende hin verjüngt, um einen dielektrischen Übergangsbereich zum Abstrahlen von Signalen zu bilden, die sich zu dem entfernten Ende des dielektrischen Stabes hin in das zweite dielektrische Material ausbreiten.

Die US 2015/008993 A1 betrifft einen Wellenleiterkoppler der angeordnet ist, um einen metallischen Wellenleiter mit einem dielektrischen Wellenleiter zu koppeln.

Der vorliegenden Erfindung liegt die Aufgabe zugrunde, eine verbesserte Wellenleiteranordnung bereitzustellen, insbesondere eine Wellenleiteranordnung mit verringerter Modendispersion bereitzustellen.

Der vorliegenden Erfindung liegt auch die Aufgabe zugrunde, einen verbesserten Wellenleiterübergang bereitzustellen, bei dem insbesondere eine Anregung höherer Moden bei einem Übergang zu einem dielektrischen Multi-Mode-Wellenleiter vermieden werden kann.

Ferner liegt der Erfindung die Aufgabe zugrunde, eine vorteilhafte Verwendung einer Wellenleiteranordnung bereitzustellen.

Die Aufgabe wird für die Wellenleiteranordnung durch die Merkmale des Anspruchs 2, für den Wellenleiterübergang durch die Merkmale des Anspruchs 1 und für die Verwendung durch die Merkmale des Anspruchs 15 gelöst.

Die abhängigen Ansprüche betreffen vorteilhafte Ausführungsformen und Varianten der Erfindung.

Erfindungsgemäß wird eine Wellenleiteranordnung vorgeschlagen, umfassend einen ersten Wellenleiter, einen zweiten, dielektrischen Multi-Mode-Wellenleiter, sowie einen Wellenleiterübergang zur Übertragung einer elektromagnetischen Welle zwischen dem ersten Wellenleiter und dem zweiten Wellenleiter.

Mit einer elektromagnetischen Welle im Rahmen der Erfindung ist eine elektromagnetische Welle gemeint, die nicht innerhalb des für eine optische Signalübertragung verwendeten Lichtspektrums liegt.

Die Erfindung ist zur Übertragung einer elektromagnetischen Welle im Millimeterbereich (30 GHz bis 300 GHz) und Submillimeterbereich (300 GHz bis 3 THz) vorgesehen.

Auf die Übertragungsrichtung der elektromagnetischen Welle kommt es im Rahmen der Erfindung nicht an. Die elektromagnetische Welle kann somit ausgehend von dem ersten Wellenleiter über den Wellenleiterübergang in den zweiten Wellenleiter eingespeist werden - oder umgekehrt. Auch eine bidirektionale Übertragung ist im Rahmen der Erfindung möglich. Insofern nachfolgend auf eine Übertragung der elektromagnetischen Welle von dem ersten Wellenleiter in den zweiten Wellenleiter Bezug genommen wird, ist dies nur der vereinfachten Beschreibung der Erfindung zuzurechnen und nicht einschränkend zu verstehen.

Der zweite Wellenleiter ist vorzugsweise als dielektrischer Hohlleiter ausgebildet. Der zweite Wellenleiter kann insbesondere einen runden Querschnitt aufweisen. Vorzugsweise ist der zweite Wellenleiter als runder, dielektrischer Hohlleiter ausgebildet.

Der Wellenleiterübergang der erfindungsgemäßen Wellenleiteranordnung weist ein dielektrisches Wellenleiterstück auf, das zwischen dem ersten Wellenleiter und dem zweiten Wellenleiter angeordnet ist, um die elektromagnetische Welle zwischen dem ersten Wellenleiter und dem zweiten Wellenleiter durch das dielektrische Wellenleiterstück zu übertragen.

Bei dem dielektrischen Wellenleiterstück handelt es sich vorzugsweise um ein von dem ersten Wellenleiter und/oder von dem zweiten Wellenleiter separat ausgebildetes Bauteil.

Das dielektrische Wellenleiterstück ist erfindungsgemäß ausgebildet, um zumindest in einem dem ersten Wellenleiter zugewandten, vorderen Abschnitt eine geringere Modenzahl zu führen, als der zweite Wellenleiter zu führen vermag.

Die Erfindung bezieht sich somit auf einen verbesserten Übergang von einem beliebigen Wellenleiter, beispielsweise einem Koaxialkabel, einem Eindraht- Wellenleiter, einem metallischen oder dielektrischen Hohlleiter oder einem Streifenleiter, auf einen dielektrischen Multi-Mode-Wellenleiter.

Insofern der zweite Wellenleiter entlang seiner Längsachse unterschiedliche Feldkonfigurationen aufweist, beispielsweise in einem ersten Bereich eine erste maximale Modenzahl zu führen vermag und in einem zweiten Bereich eine hiervon abweichende, zweite maximale Modenzahl zu führen vermag, ist im Rahmen der Erfindung vorgesehen, dass das dielektrische Wellenleiterstück ausgebildet ist, um in seinem vorderen Abschnitt eine geringere Modenzahl zu führen, als der zweite Wellenleiter in dem dem dielektrischen Wellenleiterstück zugewandten vorderen Bereich zu führen vermag.

Dadurch, dass das dielektrische Wellenleiterstück in seinem vorderen Abschnitt nur eine geringere Modenzahl zu führen vermag als der zweite Wellenleiter, kann die beim Übergang eines beliebigen Wellenleiters auf einen Wellenleiter, welcher mehrere Moden zu führen vermag, auftretende Anregung ungewünschter Moden vermieden oder zumindest stark reduziert werden, so dass sich die daraus resultierende Modendispersion und ihre negativen Auswirkungen auf die Datenübertragung praktisch vernachlässigen lassen. Erfindungsgemäß kann die Anregung höherer Moden beim Übergang der elektromagnetischen Welle von dem ersten Wellenleiter in den zweiten Wellenleiter durch den dazwischen angeordneten Wellenleiterübergang unterdrückt werden.

In einer Weiterbildung der Erfindung kann insbesondere vorgesehen sein, dass der vordere Abschnitt des dielektrischen Wellenleiterstücks als Single-Mode-Wellenleiter ausgebildet ist.

Vorzugsweise ist der vordere Abschnitt des dielektrischen Wellenleiterstück somit ausgebildet, lediglich die Grundmode zu übertragen. Hierdurch kann die Einspeisung höherer Moden beim Übergang von dem ersten Wellenleiter in das dielektrische Wellenleiterstück vollständig vermieden werden. Es kann im Rahmen der Erfindung aber bereits vorteilhaft sein, wenn der vordere Abschnitt des dielektrischen Wellenleiterstücks eine sonstige geringe Anzahl Moden zu führen vermag, welche für eine gegebene Anwendung als unkritisch angesehen werden, beispielsweise zwei, drei, vier, fünf oder sechs Moden.

Durch die Vermeidung der Anregung ungewünschter höherer Moden kann die Modendispersion in dem Multi-Mode-Wellenleiter deutlich verringert werden. Ferner kann die in die für die eigentliche Übertragung vorgesehenen Moden eingespeiste Leistung erhöht und eine nahezu identische Anpassung an beiden Eingängen des Wellenleiterübergangs erreicht werden.

Unter dem Begriff "höhere Moden" sind vorliegend alle Moden zu verstehen, deren jeweiligen Grenzfrequenzen oberhalb der Grenzfrequenz der Mode liegt, in der die Daten übertragen werden sollen. Vorzugsweise werden die Daten in der Grundmode, gegebenenfalls in unterschiedlichen Polarisationen, übertragen.

Erfindungsgemäß ist es durch die Verwendung des Wellenleiterübergangs erstmals vorteilhaft möglich, einen Multi-Mode-Wellenleiter bzw. ein Übertragungssystem mit Multi-Mode-Fasern zur Übertragung einer elektromagnetischen Welle zu verwenden, welches grundsätzlich bessere Übertragungseigenschaften besitzt als ein Übertragungssystem mit Single-Mode-Fasern, da die Modendispersion erfindungsgemäß hinreichend unterdrückt werden kann.

In einer Weiterbildung der Erfindung kann vorgesehen sein, dass der vordere Abschnitt des dielektrischen Wellenleiterstücks einen bezüglich dem zweiten Wellenleiter verringerten Querschnitt, eine bezüglich dem zweiten Wellenleiter verringerte Permittivität eines dielektrischen Kernmaterials und/oder eine bezüglich dem zweiten Wellenleiter erhöhte Permittivität eines das dielektrische Kernmaterial umhüllenden Mantels aufweist.

Mit dem Begriff "Kernmaterial" ist vorliegend das Material des dielektrischen Wellenleiterstücks gemeint, das von dem Mantel umhüllt wird.

Durch die vorstehend beschriebenen Möglichkeiten kann die maximale Anzahl übertragbarer Moden in dem vorderen Abschnitt des dielektrischen Wellenleiterstücks vorteilhaft vorgegeben werden, insbesondere in Bezug zu dem zweiten Wellenleiter.

Eine geeignete Möglichkeit zur Reduzierung der Anzahl führbarer Moden des dielektrischen Wellenleiterstücks ist insbesondere eine Modifikation der Geometrie im Hinblick auf den zweiten Wellenleiter. Insbesondere kann die Querschnittsfläche des dielektrischen Wellenleiterstücks gegenüber der Querschnittsfläche des zweiten Wellenleiters verringert sein, wodurch das dielektrische Wellenleiterstück eine geringere Modenanzahl zu führen vermag, als der zweite Wellenleiter.

Insbesondere kann auch eine beliebige Kombination abweichender Geometrien mit Änderung der Permittivität des dielektrischen Wellenleiterstücks und/oder des das dielektrische Wellenleiterstück umgebenden Materials (Mantel) vorgesehen sein. Hierdurch kann sich der Freiheitsgrad beim Entwurf sowohl bezüglich der mechanischen Stabilität, der Herstellbarkeit als auch bei der Materialauswahl erhöhen.

Der Kern des dielektrischen Wellenleiterstücks kann insgesamt oder zumindest in seinem vorderen Abschnitt beispielsweise eine relative Permittivität von 1,8 bis6,0, vorzugsweise 2,0 bis 3,0 aufweisen.

Der Mantel des dielektrischen Wellenleiterstücks kann beispielsweise eine relative Permittivität von 1,0 bis 3,0, vorzugsweise 1,0 bis 2,0 aufweisen.

Das dielektrische Wellenleiterstück kann beispielsweise im Wesentlichen aus Polyethylen oder Polytetrafluorethylen ausgebildet sein. Das dielektrische Wellenleiterstück kann auch im Wesentlichen aus Polystyrol ausgebildet sein, was insbesondere aufgrund dessen guter Verarbeitungseigenschaften von Vorteil sein kann.

Erfindungsgemäß ist vorgesehen, dass das dielektrische Wellenleiterstück einen dem zweiten Wellenleiter zugewandten, hinteren Abschnitt aufweist. Der hintere Abschnitt ist ausgebildet, eine höhere Modenzahl zu führen als der vordere Abschnitt des dielektrischen Wellenleiterstücks.

Der hintere Abschnitt des dielektrischen Wellenleiterstücks kann dabei vorzugsweise so ausgelegt sein, dass die Anregung höherer Moden bei dem Übergang zwischen dem hinteren Abschnitt des dielektrischen Wellenleiterstücks zu dem zweiten Wellenleiter möglichst gering ist.

Es kann vorgesehen sein, dass sich der Durchmesser des dielektrischen Wellenleiterstücks in Richtung auf den zweiten Wellenleiter vergrößert, insbesondere ausgehend von dem vorderen Abschnitt des dielektrischen Wellenleiterstücks zu dem hinteren Abschnitt des dielektrischen Wellenleiterstücks vergrößert.

In einer Weiterbildung der Erfindung kann insbesondere vorgesehen sein, dass der hintere Abschnitt des dielektrischen Wellenleiterstücks einen Übergang zwischen unterschiedlichen Geometrien und/oder Permittivitäten (von Kern oder Mantel) des vorderen Abschnitts des dielektrischen Wellenleiterstücks und des zweiten Wellenleiters ausbildet.

Durch einen entsprechenden Übergang kann eine geeignete Anpassung des dielektrischen Wellenleiterstücks zur Übertragung der elektromagnetischen Welle zwischen dem ersten und dem zweiten Wellenleiter bereitgestellt werden.

Es kann vorgesehen sein, durch entsprechende Anpassung des dielektrischen Wellenleiterstücks bei der Übertragung der elektromagnetischen Welle in den zweiten Wellenleiter gezielt eine gewünschte Mode in dem zweiten Wellenleiter anzuregen.

Der Mantel des dielektrischen Wellenleiterstücks kann in seinem hinteren Abschnitt beispielsweise eine relative Permittivität von 1,0 bis 3,0, vorzugsweise 1,0 bis 2,0, aufweisen.

In einer Weiterbildung kann außerdem vorgesehen sein, dass der hintere Abschnitt einen kontinuierlichen, abschnittsweise kontinuierlichen oder diskret gestuften Übergang ausbildet.

Im Rahmen eines abschnittsweise kontinuierlichen Übergangs kann insbesondere vorgesehen sein vereinzelt, beispielsweise in einem mittleren Bereich des hinteren Abschnitts des dielektrischen Wellenleiters, einen oder mehrere sprunghafte Übergänge geometrischer Art und/oder physikalischer Materialeigenschaften einzubringen.

In einer Weiterbildung kann außerdem vorgesehen sein, dass der hintere Abschnitt einen linearen Übergang, exponentiellen Übergang und/oder einen Übergang gemäß einem monotonen Abschnitt einer Kosinusfunktion ausbildet.

Ein linearer Übergang, exponentieller Übergang und/oder ein Übergang gemäß einem monotonen Abschnitt einer Kosinusfunktion eignet sich insbesondere als kontinuierlicher oder abschnittsweise kontinuierlicher Übergang zwischen unterschiedlichen Geometrien, beispielsweise unterschiedlichen Querschnittsflächen des vorderen und hinteren Abschnitts des dielektrischen Wellenleiters.

Beispielsweise kann der hintere Abschnitt des Wellenleiterstücks eine entlang der Längsachse verlaufende, einem monotonen Abschnitt einer Kosinusfunktion folgende oder lineare Änderung des Außenradius aufweisen und somit einen Übergang von einem geringeren Außenradius des vorderen Abschnitts des Wellenleiterstücks zu einem größeren Radius des zweiten Wellenleiters ausbilden.

In einer Weiterbildung kann außerdem vorgesehen sein, dass der hintere Abschnitt einen gestuften Übergang in Form von Stufen der Länge eines ganzzahligen Vielfachen von einem Viertel bis zur Hälfte der geführten Wellenlänge der elektromagnetischen Welle bei der Mittenfrequenz eines zu übertragenden Signals ausbildet.

Ein solcher gestufter Übergang kann sich insbesondere als Übergang zwischen unterschiedlichen Geometrien, beispielsweise unterschiedlichen Querschnittsflächen des vorderen und hinteren Abschnitts des dielektrischen Wellenleiterstücks, eignen.

Beispielsweise kann der hintere Abschnitt des Wellenleiterstücks eine entlang der Längsachse verlaufende gestufte Änderung des Außenradius aufweisen und somit einen Übergang von einem geringeren Außenradius des vorderen Abschnitts des Wellenleiterstücks zu einem größeren Radius des zweiten Wellenleiters ausbilden.

In einer Weiterbildung der Erfindung kann vorgesehen sein, dass ein Übergang zwischen unterschiedlichen Permittivitäten mittels Compoundierung, Materialdichtemodifikation und/oder Zusammenfügung verschiedener Materialien in dem hinteren Abschnitt des dielektrischen Wellenleiterstücks ausgebildet ist.

Die Permittivitäten von Kern und/oder Mantel oder deren Verhältnis können somit von dem vorderen Abschnitt des Wellenleiterstücks zu dem hinteren Ende des Wellenleiterstücks kontinuierlich, abschnittsweise kontinuierlich oder diskret ineinander übergehen.

Im Rahmen der Compoundierung (Mischen unterschiedlicher Materialien) können beispielsweise Polymerlegierungen, ein Polyblend oder eine Dotierung des Materials in Frage kommen. Eine Modifikation der Dichte des dielektrischen Wellenleiterstücks kann beispielsweise durch Stauchen, Ausschäumen oder eine abweichende Kristallisierung erfolgen.

Schließlich können auch mehrere Materialien geometrisch zusammengesetzt bzw. zusammengefügt werden, die jeweils unterschiedliche Permittivitäten aufweisen und schließlich insgesamt das dielektrische Wellenleiterstück und/oder einen der Abschnitte des dielektrischen Wellenleiterstücks ausbilden. In diesem Fall kann insbesondere ein diskret gestufter Übergang zwischen den Permittivitäten des vorderen Abschnitts und des hinteren Abschnitts des dielektrischen Wellenleiterstücks bereitgestellt werden.

In einer Weiterbildung der Erfindung kann ferner vorgesehen sein, dass der hintere Abschnitt des dielektrischen Wellenleiterstücks und ein vorderer Bereich des zweiten Wellenleiters ausgebildet sind, um deren dielektrische Kerne und/oder deren die dielektrischen Kerne umhüllende Mäntel geometrisch ineinander übergehen zu lassen.

Auf die vorstehend genannte Weise kann sich eine besonders geeignete Anpassung bei der Übertragung der elektromagnetischen Welle erreichen lassen.

Insbesondere kann vorgesehen sein, das dielektrische Wellenleiterstück und den zweiten Wellenleiter mit jeweils unterschiedlichen Permittivitäten geometrisch ineinander übergehen zu lassen. Dabei kann insbesondere vorgesehen sein, die dielektrischen Kerne und/oder die die dielektrischen Kerne umgebende Mäntel des dielektrischen Wellenleiterstücks und des zweiten Wellenleiters geometrisch ineinander übergehen zu lassen.

In einer Weiterbildung der Erfindung kann vorgesehen sein, dass das dielektrische Wellenleiterstück als rechteckiger oder runder dielektrischer Hohlleiter ausgebildet ist.

Das dielektrische Wellenleiterstück kann insbesondere einen runden Querschnitt aufweisen. Vorzugsweise ist das dielektrische Wellenleiterstück als runder, dielektrischer Hohlleiter ausgebildet.

In einer Weiterbildung der Erfindung kann außerdem vorgesehen sein, dass ein Teilübergang zwischen dem ersten Wellenleiter und dem dielektrischen Wellenleiterstück angeordnet ist.

Ein entsprechender Teilübergang kann insbesondere von Vorteil sein, wenn es sich bei dem ersten Wellenleiter nicht um einen dielektrischen Wellenleiter handelt. Der Teilübergang kann in diesem Falle ausgebildet sein, die elektromagnetische Welle ausgehend von dem ersten Wellenleiter in das dielektrische Wellenleiterstück bzw. in dessen vorderen Abschnitt und/oder hinteren Abschnitt einzuleiten.

In einer Weiterbildung kann insbesondere vorgesehen sein, dass der Teilübergang als Hohlleiterhorn oder Patchantenne einer elektrischen Leiterplatte ausgebildet ist.

Grundsätzlich kann der Teilübergang als separates Bauteil ausgebildet sein. In einer Weiterbildung der Erfindung kann aber auch vorgesehen sein, dass der Teilübergang einstückig mit dem dielektrischen Wellenleiterstück ausgebildet ist.

Da die direkte Anregung des zweiten Wellenleiters durch den Teilübergang, insbesondere ein Hohlleiterhorn, zu einer starken Anregung höherer Moden in dem zweiten Wellenleiter führen würde, kann erfindungsgemäß das dielektrische Wellenleiterstück vorteilhaft sein. Insbesondere wenn das dielektrische Wellenleiterstück als dielektrisches Single-Mode-Wellenleiterstück ausgebildet ist, kann somit eine Anregung höherer Moden beim Übergang von dem ersten Wellenleiter verhindert werden. Der anschließende Übergang von dem dielektrischen Wellenleiterstück auf den zweiten Wellenleiter regt höhere Moden somit nur noch in sehr geringem Maße an.

Der Teilübergang kann den vorderen Abschnitt des Wellenleiterstücks (und ggf. zumindest teilweise auch dessen hinteren Abschnitt) funktionell überlappen.

In einer Ausgestaltung der Erfindung kann beispielsweise vorgesehen sein, dass die Moden des dielektrischen Wellenleiterstücks neben der dielektrischen Führung auch eine untergeordnete leitfähige Führung aufweisen, beispielsweise durch eine leitfähige Berandung des dielektrischen Leiters. Auf diese Weise kann der hintere Abschnitt des Wellenleiterstücks die Moden des dielektrischen Wellenleiterstücks bereits in die Moden des zweiten Wellenleiters umwandeln, während das dielektrische Wellenleiterstück noch von dem Teilübergang bzw. von dem ersten Wellenleiter angeregt wird. Hiermit kann der vorstehend genannte überlappende Bereich gebildet werden. Ein Beispiel kann ein Übergang von einem als Hohlleiter ausgebildeten ersten Wellenleiter in einen dielektrischen Multi-Mode-Wellenleiter sein, bei dem ein Hohlleiterhorn den Teilübergang ausbildet und der hintere Abschnitt des dielektrischen Wellenleiterstücks noch in dem Hohlleiterhorn beginnt.

In einer Weiterbildung kann vorgesehen sein, dass der erste Wellenleiter als Koaxialkabel, als Eindraht-Wellenleiter, als metallischer oder dielektrischer Hohlleiter oder als Streifenleiter ausbildet ist.

Der erste Wellenleiter kann beispielsweise als rechteckiger Hohlleiter ausgebildet sein, welcher über einen optional zwischen dem ersten Wellenleiter und dem dielektrischen Wellenleiterstück angeordneten Teilübergang die Grundmode in dem dielektrischen Wellenleiterstück anregt.

Grundsätzlich kann der erste Wellenleiter allerdings als beliebiger Wellenleiter zur Übertragung einer elektromagnetischen Welle ausgebildet sein.

Der Mantel des zweiten Wellenleiters kann in seinem hinteren Abschnitt beispielsweise eine relative Permittivität von 1,0 bis 3,0, vorzugsweise 1,0 bis 2,0 aufweisen. Der zweite Wellenleiter kann beispielsweise aus Polyethylen, Polytetrafluorethylen oder Polystyrol ausgebildet sein.

Beispielsweise kann der zweite Wellenleiter einen kreisrunden Querschnitt aufweisen. Ein derartiger dielektrischer Wellenleiter vermag grundsätzlich höhere Moden zu führen, sofern dieser eine minimale Wellenleiterdispersion aufweist. Die Erfindung ist allerdings nicht auf die Verwendung eines spezifischen Querschnitts bzw. einer spezifischen Geometrie des dielektrischen Multi-Mode-Wellenleiters beschränkt zu verstehen. Beispielsweise können auch rechteckige oder elliptische Wellenleiter vorgesehen sein.

Das dielektrische Wellenleiterstück und der zweite Wellenleiter sind vorzugsweise nicht identisch und weisen unterschiedliche Geometrien auf. Das dielektrische Wellenleiterstück und der zweite Wellenleiter können allerdings auch - zumindest abschnittsweise - identische Geometrien aufweisen.

Der optionale Teilübergang zwischen dem ersten Wellenleiter und dem dielektrischen Wellenleiterstück, das dielektrische Wellenleiterstück bzw. dessen vorderer Abschnitt und/oder hinterer Abschnitt können eine beliebige Länge aufweisen sowie in beliebigen Kombinationen einteilig oder mehrteilig ausgebildet sein.

Die Erfindung betrifft auch einen Wellenleiterübergang für eine vorstehend und nachfolgend beschriebene Wellenleiteranordnung, zur Übertragung einer elektromagnetischen Welle im Millimeterbereich, von 30 GHz bis 300 GHz, oder im Submillimeterbereich, von 300 GHz bis 3 THz, zwischen einem ersten Wellenleiter und einem zweiten, als dielektrischer Multi-Mode-Wellenleiter ausgebildeten Wellenleiter. Der Wellenleiterübergang weist ein dielektrisches Wellenleiterstück auf, das zwischen dem ersten Wellenleiter und dem zweiten Wellenleiter angeordnet ist. Das dielektrische Wellenleiterstück ist ferner ausgebildet, um zumindest in einem dem ersten Wellenleiter zugewandten, vorderen Abschnitt eine geringere Modenzahl zu führen, als der zweite Wellenleiter zu führen vermag.

Erfindungsgemäß kann beispielsweise ein Eingangssignal aus dem ersten Wellenleiter somit nicht direkt in den dielektrischen Multi-Mode-Wellenleiter eingeleitet, sondern zunächst durch den erfindungsgemäßen Wellenleiterübergang übertragen werden. Dabei wird die elektromagnetische Welle zunächst in einen modifizierten dielektrischen Wellenleiter, im Rahmen der Erfindung als "dielektrisches Wellenleiterstück" bezeichnet, eingeleitet, das nur eine reduzierte Modenzahl zu führen vermag.

Erfindungsgemäß kann durch den Wellenleiterübergang die Anregung höherer Moden durch den Übergang von dem ersten Wellenleiter zu dem zweiten Wellenleiter vermieden oder zumindest stark reduziert werden, wodurch eine Multi-Mode-Übertragung durch den zweiten Wellenleiter genutzt werden kann, ohne die Nachteile einer Modendispersion.

Neben den im Rahmen der erfindungsgemäßen Wellenleiteranordnung bereits genannten Vorteilen ist es ein weiterer Vorteil der Erfindung, dass durch die Vermeidung der Anregung höherer Moden am Übergang zum dielektrischen Wellenleiter ein höherer Freiheitsgrad hinsichtlich des Designs der Wellenleiter erreicht werden kann, da die Berücksichtigung der Modendispersion eine nur geringe Rolle spielt.

Die Erfindung betrifft ferner die Verwendung einer Wellenleiteranordnung gemäß den vorstehenden und nachfolgenden Ausführungen zur Datenübertragung mittels elektromagnetischer Wellen oder für die Messtechnik, insbesondere für die Terrahertz-Spektroskopie.

Der Einsatz eines die Anregung höherer Moden vermeidenden Wellenleiterübergangs ist nicht ausschließlich bei der Datenübertragung vorteilhaft, sondern kann auch in anderen Bereichen, wie beispielsweise der Messtechnik, genutzt werden. Die Erfindung ist somit nicht als spezielle und ausschließliche Lösung für dielektrische Wellenleiter zur Datenübertragung zu verstehen, sondern kann auch in anderen Einsatzgebieten dielektrischer Wellenleiter, wie beispielsweise der Terrahertz-Spektroskopie, vorteilhaft genutzt werden.

Merkmale, die bereits im Zusammenhang mit der erfindungsgemäßen Wellenleiteranordnung beschrieben wurden, sind selbstverständlich auch für den erfindungsgemäßen Wellenleiterübergang oder die beschriebene Verwendung vorteilhaft umsetzbar - und umgekehrt. Ferner können Vorteile, die bereits im Zusammenhang mit der erfindungsgemäßen Wellenleiteranordnung genannt wurden, auch auf den erfindungsgemäßen Wellenleiterübergang bzw. auf die Verwendung bezogen verstanden werden - und umgekehrt.

Ergänzend sei darauf hingewiesen, dass Begriffe, wie "umfassend", "aufweisend" oder "mit", keine anderen Merkmale oder Schritte ausschließen. Ferner schließen Begriffe, wie "ein" oder "das", die auf eine Einzahl von Schritten oder Merkmalen hinweisen, keine Mehrzahl von Schritten oder Merkmalen aus - und umgekehrt.

Nachfolgend werden Ausführungsbeispiele der Erfindung anhand der Zeichnung näher beschrieben.

Die Figuren zeigen jeweils bevorzugte Ausführungsbeispiele, in denen einzelnen Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: eine erfindungsgemäße Wellenleiteranordnung mit einem ersten Wellenleiter, einem Wellenleiterübergang und einem zweiten Wellenleiter;
- Figur 2: eine erfindungsgemäße Wellenleiteranordnung mit einem Wellenleiterübergang gemäß einer ersten Variante;
- Figur 3: eine erfindungsgemäße Wellenleiteranordnung mit einem Wellenleiterübergang gemäß einer zweiten Variante;
- Figur 4: eine erfindungsgemäße Wellenleiteranordnung mit einem Wellenleiterübergang gemäß einer dritten Variante;
- Figur 5: eine erfindungsgemäße Wellenleiteranordnung mit einem Wellenleiterübergang gemäß einer vierten Variante;
- Figur 6: eine erfindungsgemäße Wellenleiteranordnung mit einem Wellenleiterübergang gemäß einer fünften Variante;
- Figur 7: eine erfindungsgemäße Wellenleiteranordnung mit einem Wellenleiterübergang gemäß einer sechsten Variante; und
- Figur 8: eine erfindungsgemäße Wellenleiteranordnung mit einem Wellenleiterübergang gemäß einer siebten Variante.

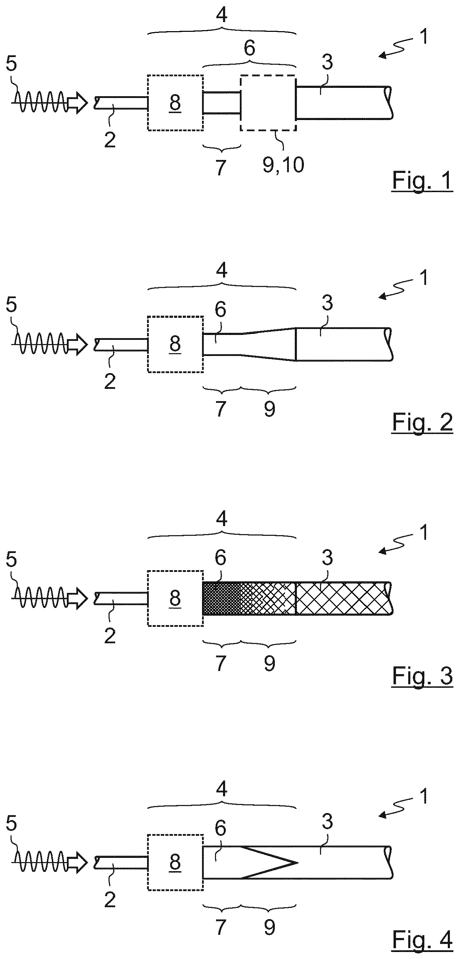

Figur 1 zeigt eine erfindungsgemäße Wellenleiteranordnung 1. Die Wellenleiteranordnung 1 umfasst einen ersten Wellenleiter 2, einen zweiten Wellenleiter 3 und einen Wellenleiterübergang 4 zur Übertragung einer elektromagnetischen Welle 5 zwischen dem ersten Wellenleiter 2 und dem zweiten Wellenleiter 3.

Der erste Wellenleiter 2 kann als beliebiger Wellenleiter ausgebildet sein. Der erste Wellenleiter 2 kann somit beispielsweise als Koaxialkabel, als Eindraht-Wellenleiter, als metallischer oder dielektrischer Hohlleiter oder als Streifenleiter ausgebildet sein.

Der zweite Wellenleiter 3 ist als dielektrischer Multi-Mode-Wellenleiter und vorzugsweise als dielektrischer Hohlleiter ausgebildet.

Der Wellenleiterübergang 4 weist ein dielektrisches Wellenleiterstück 6 auf, das zwischen dem ersten Wellenleiter 2 und dem zweiten Wellenleiter 3 angeordnet ist, wobei das dielektrische Wellenleiterstück 6 ausgebildet ist, um zumindest in einem dem ersten Wellenleiter 2 zugewandten, vorderen Abschnitt 7 eine geringere Modenzahl zu führen, als der zweite Wellenleiter 3 zu führen vermag.

Vorzugsweise ist der vordere Abschnitt 7 des Wellenleiterstücks 6 als Single-Mode-Wellenleiter ausgebildet.

Zur Übertragung der elektromagnetischen Welle 5 zwischen dem ersten Wellenleiter 2 und dem dielektrischen Wellenleiterstück 6 ist in den Ausführungsbeispielen ein Teilübergang 8 zwischen dem ersten Wellenleiter 2 und dem dielektrischen Wellenleiterstück 6 angeordnet. Der Teilübergang 8 kann mit dem dielektrischen Wellenleiterstück 6 einstückig oder mehrstückig ausgebildet sein und ist im Ausführungsbeispiel lediglich schematisch als Blackbox angedeutet. Der Teilübergang 8 kann beispielsweise als Hohlleiterhorn oder Patchantenne einer elektrischen Leiterplatte ausgebildet sein. Der Teilübergang 8 kann sich mit dem vorderen Abschnitt 7 und/oder mit dem nachfolgend noch beschriebenen hinteren Abschnitt 9 des dielektrischen Wellenleiterstücks 6 auch funktional überlappen.

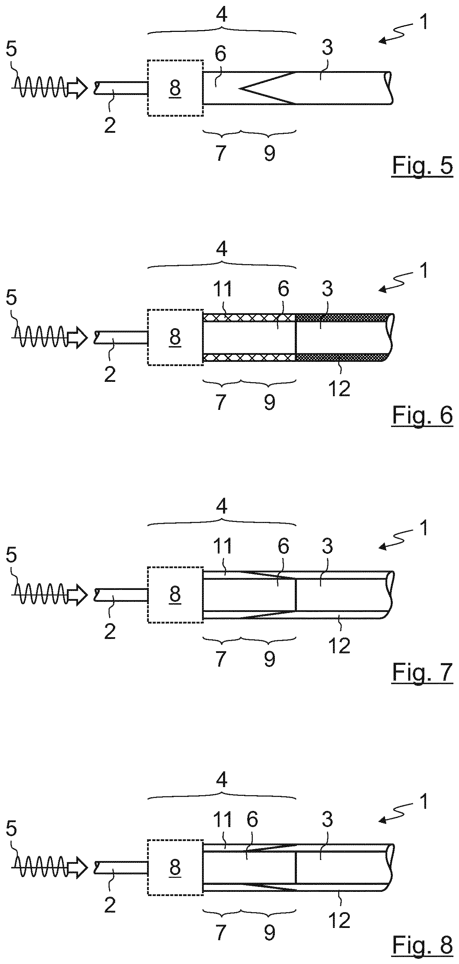

Um hinsichtlich des zweiten Wellenleiters 3 bzw. zumindest einem dem dielektrischen Wellenleiterstück 6 zugewandten vorderen Bereich des zweiten Wellenleiter 3 eine geringere Modenzahl zu führen, kann der vordere Abschnitt 7 des Wellenleiterstücks 6 einen bezüglich dem zweiten Wellenleiter 3 verringerten Querschnitt (vgl. Figur 1 und Figur 2) aufweisen. Alternativ oder zusätzlich kann das Wellenleiterstück 6 auch eine bezüglich dem zweiten Wellenleiter 3 verringerte Permittivität seines dielektrischen Kernmaterials (durch Schraffierungen in Figur 3 angedeutet) und/oder eine bezüglich dem zweiten Wellenleiter 3 erhöhte Permittivität eines das dielektrische Kernmaterial umhüllenden Mantels (vgl. Figur 6) aufweisen.

In den Figuren 1 bis 5 sind zur Veranschaulichung jeweils nur die Kerne des dielektrischen Wellenleiters 3 und des dielektrischen Wellenleiterstücks 6 gezeigt. Die Mäntel (vgl. Figuren 6 bis 8) sind nicht dargestellt.

Das dielektrische Wellenleiterstück 6 kann auch als rechteckiger oder runder dielektrischer Hohlleiter ausgebildet sein.

Das dielektrische Wellenleiterstück 6 kann einen dem zweiten Wellenleiter 3 zugewandten, hinteren Abschnitt 9 aufweisen, der einen Übergang zwischen unterschiedlichen Geometrien und/oder Permittivitäten des vorderen Abschnitts 7 des Wellenleiterstücks 6 und des zweiten Wellenleiters 3 ausbildet. In Figur 1 ist hierfür vereinfacht zunächst nur eine Blackbox dargestellt, die weiteren Figuren zeigen verschiedenen Varianten des hinteren Abschnitts 9 des Wellenleiterstücks 6.

Figur 2 zeigt eine Wellenleiteranordnung 1 mit einem Wellenleiterübergang 4, dessen dielektrisches Wellenleiterstück 6 in seinem vorderer Abschnitt 7 einen im Vergleich mit dem zweiten Wellenleiter 3 verringerten Querschnitt aufweist und dessen hinterer Abschnitt 9 einen Übergang zu dem vergrößerten Querschnitt des zweiten Wellenleiters 3 ausbildet. Der Übergang des hinteren Abschnitts 9 verläuft dabei kontinuierlich in linearer Weise ausgehend von dem vorderen Abschnitt 7 in Richtung auf den zweiten Wellenleiter 3. Grundsätzlich kann der Übergang in dem hinteren Abschnitt 9 linear, exponentiell und/oder kosinusförmig (d. h. dem monotonen Abschnitt einer Kosinusfunktion folgend) oder auf sonstige Weise verlaufen. Der durch den hinteren Abschnitt 9 gebildete Übergang kann kontinuierlich, wie dargestellt, aber auch nur abschnittsweise kontinuierlich oder diskret gestuft ausgebildet sein.

An dieser Stelle sei nochmals betont, dass das dielektrische Wellenleiterstück 6 und der Teilübergang 8 zwischen dem ersten Wellenleiter 2 und dem dielektrischen Wellenleiterstück 6 auch einteilig ausgebildet sein und ineinander übergehen können. Das in Figur 2 als ein sich ändernder Kernquerschnitt ausgebildete Wellenleiterstück 6 kann auch Teil des Teilübergangs 8 sein, wenn dieser beispielsweise als metallisches Hohlleiterhorn ausgebildet ist.

Figur 3 zeigt eine Variante des Wellenleiterstücks 6, bei der der vordere Abschnitt 7 eine im Vergleich zu dem zweiten Wellenleiter 3 verringerte Permittivität aufweist. Die unterschiedlichen Permittivitäten sind in Figur 3 durch verschiedene Kreuzschraffierungen angedeutet. Der hintere Abschnitt 9 bildet einen Übergang zwischen der verringerten Permittivität des vorderen Abschnitts 7 und der Permittivität des zweiten Wellenleiters 3 aus. Dies kann beispielsweise mittels Compoundierung, Materialdichtemodifikation und/oder Zusammenfügung verschiedener Materialien in dem hinteren Abschnitt 9 des Wellenleiterstücks 6 erfolgen. Vorliegend ist ein stufiger Übergang in dem hinteren Abschnitt 9 des Wellenleiterstücks 6 dargestellt, beispielsweise aufgrund der Zusammenfügung verschiedener Materialien.

Es kann auch vorgesehen sein, dass der hintere Abschnitt 9 des Wellenleiterstücks 6 und ein vorderer Bereich des zweiten Wellenleiters 3 ausgebildet sind, um deren dielektrische Kerne geometrisch ineinander übergehen zu lassen. Dies ist in den Figuren 4 und 5 beispielhaft dargestellt. Ein derartiger geometrischer Übergang kann insbesondere dann vorteilhaft sein, wenn sich die Permittivitäten des dielektrischen Wellenleiterstücks 6, zumindest des hinteren Abschnitts 9 des dielektrischen Wellenleiterstücks 6, und des zweiten Wellenleiters 3 zusätzlich unterscheiden.

Im Rahmen der Erfindung ist es auch möglich, die Anzahl Moden, die das dielektrische Wellenleiterstück 6 zu führen vermag, verglichen mit dem zweiten Wellenleiter 3 zu reduzieren, indem die Permittivität eines den dielektrischen Kern des Wellenleiterstücks 6 umhüllenden Mantels 11 im Hinblick auf einen Mantel des zweiten Wellenleiters 3 erhöht ist. Dies ist in Figur 6 dargestellt, wobei die unterschiedlichen Permittivitäten abermals durch verschiedene Kreuzschraffierungen angedeutet sind. Der zweite Wellenleiter 3 weist einen Mantel 12 auf, der eine geringere Permittivität aufweist, als der Mantel 11 im hinteren Abschnitt 9 des dielektrischen Wellenleiterstücks 6.

Es kann auch vorgesehen sein, dass der hintere Abschnitt 9 des Wellenleiterstücks 6 und ein vorderer Bereich des zweiten Wellenleiters 3 ausgebildet sind, um deren die dielektrischen Kerne umhüllende Mäntel geometrisch ineinander übergehen zu lassen. Dies ist in den Figuren 7 und 8 angedeutet.

Die beschriebene Wellenleiteranordnung 1 kann vorteilhaft für die Datenübertragung mit sehr hohen Datenraten zumindest über mittlere Distanzen verwendbar sein. Die dargestellte Wellenleiteranordnung 1 eignet sich allerdings auch zur Verwendung in der Messtechnik, beispielsweise für die Terrahertz-Spektroskopie.

## Patentansprüche

1. Wellenleiterübergang (4) für eine Wellenleiteranordnung (1), die einen ersten Wellenleiter (2) und einen zweiten, als dielektrischen Multi-Mode-Wellenleiter, vorzugsweise als dielektrischen Hohlleiter, ausgebildeten Wellenleiter (3) aufweist, zur Übertragung einer elektromagnetischen Welle (5) im Millimeterbereich, von 30 GHz bis 300 GHz, oder im Submillimeterbereich, von 300 GHz bis 3 THz, zwischen dem ersten Wellenleiter (2) und dem zweiten Wellenleiter (3), aufweisend ein dielektrisches Wellenleiterstück (6), das zwischen dem ersten Wellenleiter (2) und dem zweiten Wellenleiter (3) anordenbar ist, wobei das dielektrische Wellenleiterstück (6) ausgebildet ist, um zumindest in einem dem ersten Wellenleiter (2) zugewandten, vorderen Abschnitt (7) eine geringere Modenzahl zu führen, als der zweite Wellenleiter (3) zu führen vermag, **dadurch gekennzeichnet, dass** das dielektrische Wellenleiterstück (6) einen dem zweiten Wellenleiter (3) zugewandten, hinteren Abschnitt (9) aufweist, der ausgebildet ist, eine höhere Modenzahl zu führen als der vordere Abschnitt (7) des dielektrischen Wellenleiterstücks (6).

2. Wellenleiteranordnung (1), umfassend den Wellenleiterübergang gemäß Anspruch 1, den ersten Wellenleiter (2) und den zweiten Wellenleiter (3), wobei das dielektrische Wellenleiterstück (6) zwischen dem ersten Wellenleiter (2) und dem zweiten Wellenleiter (3) angeordnet ist.

3. Wellenleiteranordnung (1) nach Anspruch 2**,**
**dadurch gekennzeichnet, dass**
der vordere Abschnitt (7) des dielektrischen Wellenleiterstücks (6) als Single-Mode-Wellenleiter ausgebildet ist.

4. Wellenleiteranordnung (1) nach einem der Ansprüche 2 bis 3,
**dadurch gekennzeichnet, dass**
der vordere Abschnitt (7) des dielektrischen Wellenleiterstücks (6) einen bezüglich dem zweiten Wellenleiter (3) verringerten Querschnitt, eine bezüglich dem zweiten Wellenleiter (3) verringerte Permittivität eines dielektrischen Kernmaterials und/oder eine bezüglich dem zweiten Wellenleiter (3) erhöhte Permittivität eines das dielektrische Kernmaterial umhüllenden Mantels (11) aufweist.

5. Wellenleiteranordnung (1) nach einem der Ansprüche 2 bis 4,
**dadurch gekennzeichnet, dass**
der dem zweiten Wellenleiter (3) zugewandte, hintere Abschnitt (9) des dielektrischen Wellenleiterstücks (6) einen Übergang zwischen unterschiedlichen Geometrien und/oder Permittivitäten des vorderen Abschnitts (7) des dielektrischen Wellenleiterstücks (6) und des zweiten Wellenleiters (3) ausbildet.

6. Wellenleiteranordnung (1) nach Anspruch 5,
**dadurch gekennzeichnet, dass**
der hintere Abschnitt (9) einen kontinuierlichen, abschnittsweise kontinuierlichen oder diskret gestuften Übergang ausbildet.

7. Wellenleiteranordnung (1) nach einem der Ansprüche 5 oder 6,
**dadurch gekennzeichnet, dass**
ein Übergang zwischen unterschiedlichen Permittivitäten mittels Compoundierung, Materialdichtemodifikation und/oder Zusammenfügung verschiedener Materialien in dem hinteren Abschnitt (9) des dielektrischen Wellenleiterstücks (6) ausgebildet ist.

8. Wellenleiteranordnung (1) nach einem der Ansprüche 5 bis 7,
**dadurch gekennzeichnet, dass**
der hintere Abschnitt (9) des dielektrischen Wellenleiterstücks (6) und ein vorderer Bereich des zweiten Wellenleiters (3) ausgebildet sind, um deren dielektrische Kerne und/oder deren die dielektrischen Kerne umhüllende Mäntel (11) geometrisch ineinander übergehen zu lassen.

9. Wellenleiteranordnung (1) nach einem der Ansprüche 2 bis 8,
**dadurch gekennzeichnet, dass**
das dielektrische Wellenleiterstück (6) als rechteckiger oder runder dielektrischer Hohlleiter ausgebildet ist.

10. Wellenleiteranordnung (1) nach einem der Ansprüche 2 bis 9,
**dadurch gekennzeichnet, dass**
ein Teilübergang (8) zwischen dem ersten Wellenleiter (2) und dem dielektrischen Wellenleiterstück (6) angeordnet ist.

11. Wellenleiteranordnung (1) nach Anspruch 10,
**dadurch gekennzeichnet, dass**
der Teilübergang (8) als Hohlleiterhorn oder Patchantenne einer elektrischen Leiterplatte ausgebildet ist.

12. Wellenleiteranordnung (1) nach Anspruch 10 oder 11,
**dadurch gekennzeichnet, dass**
der Teilübergang (8) einstückig mit dem dielektrischen Wellenleiterstück (6) ausgebildet ist.

13. Wellenleiteranordnung (1) nach einem der Ansprüche 2 bis 12,
**dadurch gekennzeichnet, dass**
der ersten Wellenleiter (2) als Koaxialkabel, als Eindraht-Wellenleiter, als metallischer oder dielektrischer Hohlleiter oder als Streifenleiter ausgebildet ist.

14. Verwendung einer Wellenleiteranordnung (1) gemäß einem der Ansprüche 2 bis 13 zur Datenübertragung mittels elektromagnetischer Wellen (5) oder für die Messtechnik, insbesondere für die Terrahertz-Spektroskopie.

## Claims

1. A waveguide transition (4) for a waveguide assembly (1), which comprises a first waveguide (2) and a second waveguide (3) that is embodied as a dielectric multi-mode waveguide, preferably as a dielectric hollow conductor, for transmitting an electromagnetic wave (5) in the millimeter range, from 30 GHz to 300 GHz, or sub-millimeter range, from 300 GHz to 3 THz, between the first waveguide (2) and the second waveguide (3), comprising a dielectric waveguide piece (6) which can be arranged between the first waveguide (2) and the second waveguide (3), wherein the dielectric waveguide piece (6) is embodied in order to be able to run a lower number of modes at least in a front section (7) that is facing the first waveguide (2) than the second waveguide (3), **characterized in that** the dielectric waveguide piece (6) comprises a rear section (9) that is facing the second waveguide (3), which is embodied to run a higher number of modes than the front section (7) of the dielectric waveguide piece (6).

2. A waveguide assembly (1) comprising the waveguide transition (4) according to claim 1, the first waveguide (2) and the second waveguide (3), wherein the dielectric waveguide piece (6) is arranged between the first waveguide (2) and the second waveguide (3).

3. The waveguide assembly (1) as claimed in claim 2,
**characterized in that**
the front section (7) of the dielectric waveguide piece (6) is embodied as a single mode waveguide.

4. The waveguide assembly (1) as claimed in one of claims 2 to 3,
**characterized in that**
the front section (7) of the dielectric waveguide piece (6) has a reduced cross-section with respect to the second waveguide (3), a reduced permittivity of a dielectric core material with respect to the second waveguide (3) and/or an increased permittivity of a sheath (11), which encases the dielectric core material, with respect to the second waveguide (3)

5. The waveguide assembly (1) as claimed in one of claims 2 to 4,
**characterized in that**
the rear section (9) of the dielectric waveguide piece (6) that is facing the second waveguide (3) forms a transition between different geometries and/or permittivities of the front section (7) of the dielectric waveguide piece (6) and of the second waveguide (3).

6. The waveguide assembly (1) as claimed in claim 5,
**characterized in that**
the rear section (9) forms a continuous, continuous in sections or discretely stepped transition.

7. The waveguide assembly (1) as claimed in one of claims 5 or 6,
**characterized in that**
a transition is formed between different permittivities by means of a compounding procedure, modifying the density of the material and/or combining different materials in the rear section (9) of the dielectric waveguide piece (6).

8. The waveguide assembly (1) as claimed in one of claims 5 to 7,
**characterized in that**
the rear section (9) of the dielectric waveguide piece (6) and a front region of the second waveguide (3) are embodied in order to allow their dielectric cores and/or their sheaths (11) that encase the dielectric cores to geometrically merge into one another.

9. The waveguide assembly (1) as claimed in one of claims 2 to 8,
**characterized in that**
the dielectric waveguide piece (6) is embodied as a rectangular or round dielectric hollow conductor.

10. The waveguide assembly (1) as claimed in one of claims 2 to 9,
**characterized in that**
a part transition (8) is arranged between the first waveguide (2) and the dielectric waveguide piece (6).

11. The waveguide assembly (1) as claimed in claim 10,
**characterized in that**
the part transition (8) is embodied as a hollow conductor horn or patch antenna of an electrical printed circuit board.

12. The waveguide assembly (1) as claimed in claim 10 or 11,
**characterized in that**
the part transition (8) is embodied as one piece with the dielectric waveguide piece (6).

13. The waveguide assembly (1) as claimed in one of claims 2 to 12,
**characterized in that**
the first waveguide (2) is embodied as a coaxial cable, as a single wire waveguide, as a metal or dielectric hollow conductor or as a strip conductor.

14. Use of a waveguide assembly (1) in accordance with one of claims 2 to 13 for transmitting data by means of electromagnetic waves (5) or for use in measurement technology, in particular for use in terahertz spectroscopy.

## Revendications

1. Jonction de guides d'ondes (4) pour un ensemble de guides d'ondes (1), qui présente un premier guide d'ondes (2) et un second guide d'ondes (3) conçu comme un guide d'ondes multimode diélectrique, de préférence comme un guide creux diélectrique, pour transmettre une onde électromagnétique (5) dans le domaine millimétrique de 30 GHz à 300 GHz, ou dans le domaine sous-millimétrique de 300 GHz à 3 THz, entre le premier guide d'ondes (2) et le second guide d'ondes (3), présentant une pièce de guide d'ondes diélectrique (6) qui peut être disposée entre le premier guide d'ondes (2) et le second guide d'ondes (3), dans lequel la pièce de guide d'ondes diélectrique (6) est conçue pour guider au moins dans une section avant (7) tournée vers le premier guide d'ondes (2) un nombre de modes plus faible que le second guide d'ondes (3) ne peut guider, **caractérisé en ce que** la pièce de guide d'ondes diélectrique (6) présente une section arrière (9) tournée vers le premier guide d'ondes (2) et qui est conçue pour guider un nombre de modes plus élevée que la section avant (7) de la pièce de guide d'ondes diélectrique (6).

2. Ensemble de guides d'ondes (1), comprenant la jonction de guides d'ondes selon la revendication 1, le premier guide d'ondes (2) et le second guide d'ondes (3), dans lequel la pièce de guide d'ondes diélectrique (6) est disposée entre le premier guide d'ondes (2) et le second guide d'ondes (3).

3. Ensemble de guides d'ondes (1) selon la revendication 2, **caractérisé en ce que** la section avant (7) de la pièce de guide d'ondes diélectrique (6) est conçue comme un guide d'ondes en mode simple.

4. Ensemble de guides d'ondes (1) selon une des revendications 2 à 3, **caractérisé en ce que** la section avant (7) de la pièce de guide d'ondes diélectrique (6) présente une section transversale réduite par rapport au second guide d'ondes (3), une permittivité d'un matériau d'âme diélectrique réduite par rapport au second guide d'ondes (3) et/ou une permittivité d'une gaine (11) entourant le matériau d'âme diélectrique qui est plus élevée par rapport au second guide d'ondes (3).

5. Ensemble de guides d'ondes (1) selon une des revendications 2 à 4, **caractérisé en ce que** la section arrière (9) de la pièce de guide d'ondes diélectrique (6) qui est tournée vers le second guide d'ondes (3) forme une jonction entre différentes géométries et/ou permittivités de la section avant (7) de la pièce de guide d'ondes diélectrique (6) et du second guide d'ondes (3).

6. Ensemble de guides d'ondes (1) selon la revendication 5, **caractérisé en ce que** la section arrière (9) forme une jonction continue, continue par sections ou discrètement étagée.

7. Ensemble de guides d'ondes (1) selon une des revendications 5 ou 6, **caractérisé en ce que** une jonction entre différentes permittivités est conçue à l'aide d'une composition, d'une modification de densité de matériau et/ou d'un assemblage de différents matériaux dans la section arrière (9) de la pièce de guide d'ondes diélectrique (6).

8. Ensemble de guides d'ondes (1) selon une des revendications 5 à 7, **caractérisé en ce que** la section arrière (9) de la pièce de guide d'ondes diélectrique (6) et une région avant du second guide d'ondes (3) sont conçues pour laisser passer géométriquement l'un dans l'autre leurs âmes diélectriques et/ou leurs gaines (11) entourant les âmes diélectriques.

9. Ensemble de guides d'ondes (1) selon une des revendications 2 à 8, **caractérisé en ce que** la pièce de guide d'ondes diélectrique (6) est conçue comme un guide d'ondes diélectrique rectangulaire ou rond.

10. Ensemble de guides d'ondes (1) selon une des revendications 2 à 9, **caractérisé en ce que** une jonction partielle (8) est disposée entre le premier guide d'ondes (2) et la pièce de guide d'ondes diélectrique (6).

11. Ensemble de guides d'ondes (1) selon la revendication 10, **caractérisé en ce que** la jonction partielle (8) est conçue comme un cornet de guide d'ondes ou une antenne patch d'une carte de circuit électrique.

12. Ensemble de guides d'ondes (1) selon la revendication 10 ou 11, **caractérisé en ce que** la jonction partielle (8) est conçue d'un seul tenant avec la pièce de guide d'ondes diélectrique (6).

13. Ensemble de guides d'ondes (1) selon une des revendications 2 à 12, **caractérisé en ce que** le premier guide d'ondes (2) est conçu comme un câble coaxial, comme un guide d'ondes unifilaire, comme un guide d'ondes métallique ou diélectrique ou comme une ligne à ruban.

14. Utilisation d'un ensemble de guides d'ondes (1) selon une des revendication 2 à 13 pour la transmission de données à l'aide d'ondes électromagnétiques (5) ou pour des techniques de mesure, en particulier pour la spectroscopie Térahertz.
